# EUROPEAN PATENT APPLICATION

(11) **EP 4 582 726 A1**
(43) Date of publication of application: **09.07.2025**
(21) Application number: 25150162.3
(22) Date of filing: 03.01.2025
(51) Int. Cl.: F16L 55/162, F16L 55/163, F16L 55/165, F16L 55/179

(54) **MOLDABLE PVC TEE FITTINGS FOR IN-PLACE REPAIRS AND CORRESPONDING METHOD OF REPAIRING A DAMAGED TEE JUNCTION WITHIN A PIPELINE USING THE SAME**

(30) Priority: 05.01.2024 US 202463618177 P
(71) Applicant: Lateral-X LLC, Silt, CO 81652 (US)
(72) Inventor: WARD, Robert Macy, 1803 Medicine Bow Ct. Silt, CO 81652 (US)
(74) Representative: Herrero & Asociados, S.L.

(57) **Abstract**

An in-place PVC tee fitting repair device comprising:
a tee-shaped inflatable bladder (316) with open main line ends(330, 332) and a closed branch end (338), wherein a first open main line end is secured to a first end coupling (322) and a second open main line end is secured to second end coupling (324);
a first end fitting (372) connected to the first end coupling, the first end fitting serving as a hitch for the repair device; and
a second end fitting (374) fluidly connected to the second end coupling, the second end fitting including a heating gas input.

## Description

### Cross-reference to Related Applications

The present application claims benefit of priority to U.S. Provisional Patent Application No. 63/618,177, entitled "MOLDABLE PVC JUNCTION FITTINGS FOR IN-PLACE REPAIRS" and filed on January 5, 2024, which is specifically incorporated by reference herein for all that it discloses or teaches.

### Background

Sewer lines, water lines and other types of buried pipelines can develop leaks over time. These leaks are a result of decaying materials such as clay used in construction of the pipeline, obstructions which may clog a line, chemical exposure, or crushing due to overburden pressure on the pipeline. Many older pipelines require repair to prevent exterior leaking and possible ground water contamination. Additionally, without proper repair, ground water can infiltrate into broken sewer lines, thereby causing a significant increase in throughput volume and a resulting increased use of expensive chemicals and other materials, as well as processes, used for treatment of sewer water.

Repairing leaking sewer lines and other buried pipelines is conventionally very expensive due to the necessity of digging a trench from the surface to physically remove the pipe. The removal and replacement of this pipe from the surface is time-consuming, expensive, and not practical in many old commercial and residential neighborhoods due to narrow alleyways, heavy traffic and the volume of pipe located below existing buildings or other obstructions.

### Summary

Implementations disclosed herein include a PVC tee fitting in-place repair device comprising: a tee-shaped inflatable bladder with open main line ends and a closed branch end, wherein a first open main line end is secured to a first end coupling and a second open main line end is secured to second end coupling; a first end fitting connected to the first end coupling, the first end fitting serving as a hitch for the repair device; and a second end fitting fluidly connected to the second end coupling, the second end fitting including a heating gas input.

Implementations disclosed herein further include a repaired tee fitting within a pipeline comprising: a damaged tee junction including main line ends and a branch end in place within the pipeline; and a PVC repair tee fitting applied to the damaged tee junction from within the pipeline, the PVC repair tee fitting molded to interior circumferential surfaces of the damaged tee junction, the PVC repair tee fitting including main line ends and a branch end corresponding to the main line ends and the branch end of the damaged tee junction, the PVC repair tee fitting underlapping and sealing against the damaged tee junction.

Other implementations are contemplated and claimed herein.

### Brief Description of the Drawings

FIG. 1A is an exterior view of a damaged tee junction with an example PVC repair tee fitting in-place therein.
FIG. 1B is an interior view of the PVC repair tee fitting in place within the damaged tee junction of FIG. 1A.
FIG. 2 illustrates an example placement of a PVC repair tee fitting within an underground pipeline and in-place molding of the PVC repair tee fitting to a damaged tee junction in the underground pipeline.
FIG. 3A illustrates an example in-place repair device according to the presently disclosed technology.
FIG. 3B illustrates an example PVC repair tee fitting that corresponds to the in-place repair device of FIG. 3A.
FIG. 4A illustrates an example in-place repair device positioned within a PVC repair tee fitting immediately prior to compression of the PVC repair tee fitting within a compression shell.
FIG. 4B illustrates the PVC repair tee fitting and in-place repair device of FIG. 4A after being compressed within a compression shell.
FIG. 5 illustrates an example compressed PVC repair tee fitting and in-place repair device to be attached to a robot prior to placement within a pipeline.
FIG. 6A illustrates insertion of a leading end of an example compressed PVC repair tee fitting and in-place repair device into a pipeline using a robot.
FIG. 6B is a forward-facing view of the compressed PVC repair tee fitting and in-place repair device of FIG. 6A as viewed from the robot.
FIG. 7A is an exterior view of a damaged tee junction with an example PVC repair tee fitting and in-place repair device partially inflated and in-place therein.
FIG. 7B illustrates the in-place repair device of FIG. 7A fully inflated, thereby molding exterior surfaces of the PVC repair tee fitting to interior surfaces of the damaged tee junction.
FIG. 8 illustrates an example frame for an in-place repair device that establishes two ends of the in-place repair device and a distance therebetween.
FIG. 9 illustrates example operations for repairing a damaged tee junction in place within a pipeline.

### Detailed Description

Conventional "trenchless technology" utilizes machinery and methods directed to repairing pipelines, such as sewer pipe and other buried fluid transmission lines from the inside-out. Trenchless processes eliminate the need for digging expensive trenches to access the pipeline for repairs. For main pipeline repairs, a plastic liner is inserted into the existing pipeline and bonded to internal surfaces of the existing pipeline. Existing lateral service lines that feed the main pipeline are then located by the use of a robotic device with an optical camera. When identified, holes are drilled by the robot into the existing pipeline, thus providing access into the lateral service lines.

Unfortunately, the holes drilled into the existing lateral service line may not provide a satisfactory seal, thus permitting significant volumes of groundwater, as well as plant roots, dirt, and other foreign objects to infiltrate the main pipeline at the junction point between the lateral service line(s) and the main pipeline. Additionally, contaminants within the main pipeline can potentially leak and pollute the adjacent groundwater. Thus, a need exists to provide a reliable patching mechanism to seal the newly created junction point between existing lateral service lines and the newly lined main pipeline. In other scenarios, only the tee junction between the lateral service line(s) and the main pipeline need be repaired as both the lateral service line(s) and the main pipeline remain in good condition. A similar need exists to provide a reliable patching mechanism to seal the tee junction point between the existing lateral service line and existing main pipeline. These patching mechanisms should be operated remotely and function from within the small internal confines of the main pipeline.

Prior efforts to seal the junction between a main pipeline and a lateral service line have been attempted, but each have suffered significant disadvantages. For example, a flexible tubular liner may be inserted into a lateral line so that the entire lateral line receives a lining. Air or liquid pressure is used to extend the reversed flexible liner into the lateral. Once the liner is extended by the air pressure from the junction to the service end of the lateral pipe (i.e., the end distal from the main pipeline), access to the service end of the lateral line is required to cut away any excess liner. While this method lines the entire lateral pipe from one end to the other, it can be time consuming and difficult to achieve this method with consistent success. For one, the apparatus required for installation has many moving parts and is complex to operate. Further, access to the service end of the lateral line is needed to cut away the excess liner. Such access may difficult or impossible given placement of existing buildings or other obstructions. This complex setup makes sealing the junction of the main pipeline and lateral service line both time consuming and expensive.

For further example, a patch molded to the shape and size of the junction between the lateral service line(s) and the main pipeline may be positioned and installed with a robotic device from the main pipeline. The molded patch may have a flange shaped to fit the internal diameter of the main pipeline and a tubular stem or sleeve which penetrates into the lateral service line. This molded patch includes an interconnection substrate such as felt, sponge or other similar material on the flange and/or stem that is impregnated with a bonding agent. This allows the molded patch to be bonded to the main pipeline and/or the lateral service line.

This method requires the use of a bonding agent, which can be difficult to work with to achieve a consistent seal as it may cure too quickly or not quickly enough in the varying and largely uncontrolled temperature and moisture conditions within the pipeline. Further, it can be difficult to correctly place the molded patch in a manner than allows the interconnection substrate with bonding agent contact with all of the main pipeline and/or service line and then hold the molded patch in place as the bonding agent cures. These difficulties make sealing the junction of the main pipeline and lateral service line using the molded patch also time consuming and expensive.

Therefore, there is a need for quickly and inexpensively sealing junctions between a main pipeline and lateral service line(s) extending therefrom with consistent results. This is especially needed in situations where it is difficult or impractical to obtain access to the service end of a lateral service line. Thus, the presently disclosed technology generally relates to trenchless technology for the repair and reinforcement of pipe tee junctions. More specifically, the present disclosed technology provides a method and an apparatus for sealing tee junctions between a main pipeline and one or more lateral service line(s) extending therefrom with access exclusively from inside the main pipeline.

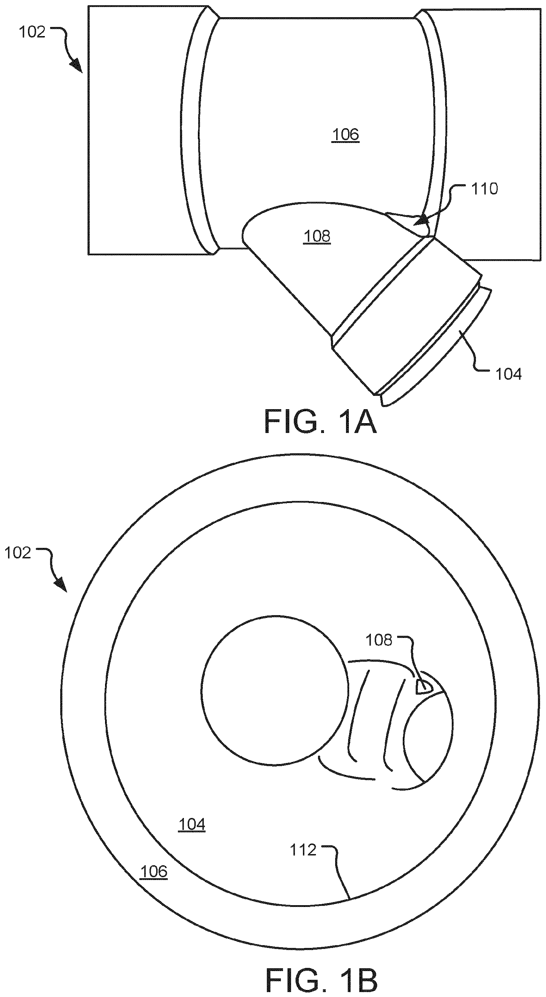

FIG. 1A is an exterior view of a damaged tee junction 102 with a PVC repair tee PVC repair tee fitting 104 in-place therein. The damaged tee junction 102 may be in the form of a variety of tee fittings, such an angled tee fitting (as shown) or a 90-degree tee fitting. A main 106 of the tee fitting may be larger than a branch 108 of the tee fitting (as illustrated), the branch 108 may be larger than the main 106, or the main 106 and the branch 108 may be of the same size. The tee fitting may also have varied overall sizes (e.g., 2" to 20" in diameter). In the depicted example, the main 106 is 8" diameter pipe with a 4" diameter branch 108 extending outward from the main 106 at a 45-degree angle. Other pipe dimensions and orientations are contemplated herein.

The damaged tee junction 102 may be of a variety of materials (e.g., clay, Polyvinyl Chloride (PVC), iron, steel, and other metal alloys). The material of the damaged tee junction 102 is not particularly relevant as the PVC repair tee fitting 104 may be used to repair any sort of damaged tee junction 102 in the form of a tee fitting. As discussed above, the damaged tee junction 102 may be that of a sewer line, with the main 106 being a sewer main and the branch 108 being a service lateral. While the presently disclosed technology is discussed herein with specific reference to sewer lines, the PVC repair tee fitting 104 may be used to repair a variety of damaged tee junctions, particularly where an exterior of the pipe junction is inaccessible (e.g., when the pipe junction is buried underground or is underwater).

The damaged tee junction 102 is illustrated in FIG. 1A as a PVC fitting, though in practice, the damaged tee junction 102 could merely be a section of main pipe with a branch pipe extending away from the main pipe. As such, the illustrated truncated branch 108 shows the PVC repair tee fitting 104 partially extending therefrom, though in practice, the entire PVC repair tee fitting 104 would be form fit within the damaged tee junction 102. Hole 110 in the damaged tee junction 102 is present to illustrate damage between the main 106 and the branch 108, though in practice, the damage may take the form of any number and size of cracks or holes at any location on the main 106 and the branch 108 and the interface therebetween that is intended to be covered by the PVC repair tee fitting 104.

FIG. 1B is an interior view of the PVC repair tee fitting 104 in place within the damaged tee junction 102 of FIG. 1A. As the PVC repair tee fitting 104 is molded and form-fit to the interior surface of the damaged tee junction 102, only a seam 112 is readily visible between the two in FIG. 1B. The hole 110 is not visible in FIG. 1B as the PVC repair tee fitting 104 has covered the hole 110 from the depicted interior view and effectively sealed the hole 110 from fluid ingress from outside of the damaged tee junction 102 or egress from inside of the damaged tee junction 102. As noted above with reference to FIG. 1A, the damaged tee junction 102 is also illustrated in FIG. 1B as a PVC fitting, though in practice, the damaged tee junction 102 would merely be a section of main pipe with a branch pipe extending away from the main pipe. As such, the illustrated main 106 and branch 108 are both truncated, though in practice, each would extend far beyond the damaged tee junction 102.

The result is a PVC-lined pipeline junction, such as a sewer pipeline junction. Specifically, the damaged tee junction 102, including the hole 110, may be a damaged junction between a main and a service lateral for the sewer pipeline. The PVC repair tee fitting 104 is a PVC tee-fitting applied to the damaged tee junction 102 from within the main 106. The PVC repair tee fitting 104 is molded or form-fit to interior circumferential surfaces of the main 106 and interior circumferential surfaces of the branch 108. The PVC repair tee fitting 104 overlaps and seals the damaged junction, particularly the hole 110.

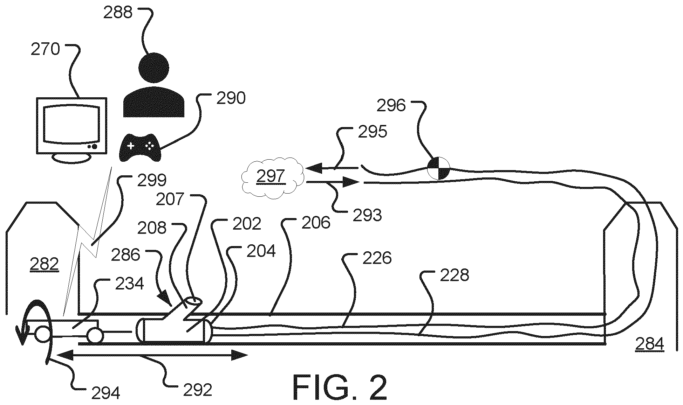

FIG. 2 illustrates an example placement of a PVC repair tee fitting 204 within an underground pipeline 206 and in-place molding of the fitting 204 to a damaged tee junction 202 in the underground pipeline 206. The underground pipeline 206 is accessible from one or both ends at manhole chambers 282, 284, each of which permits access to the underground pipeline 206 from above grade. The underground pipeline 206 and the manhole chambers 282, 284 are shown in FIG. 2 sectioned so that the interior of the underground pipeline 206 and details of the in-place repair are visible.

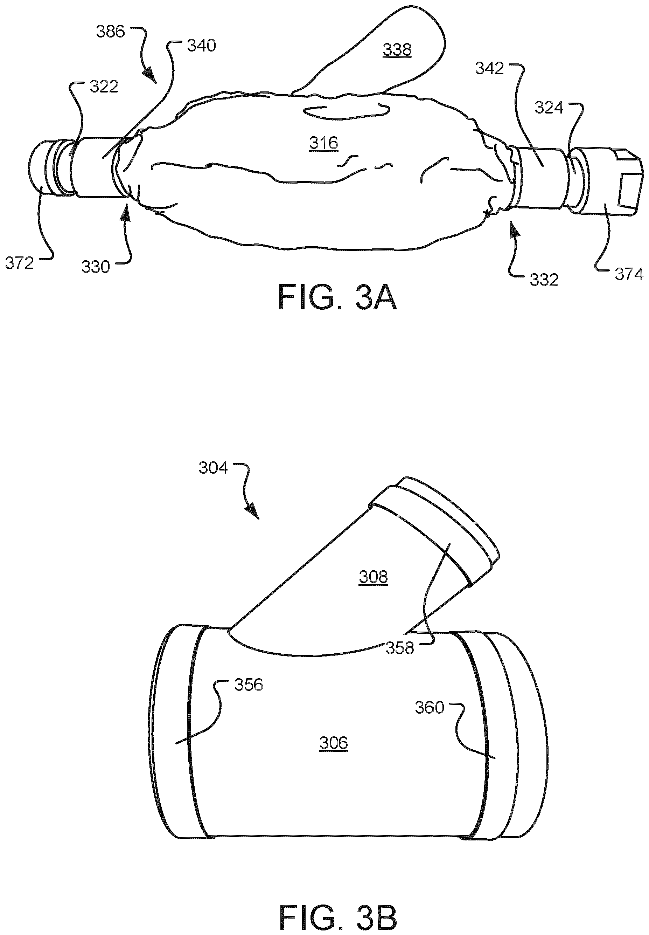

An in-place repair device 286 may include a tee-shaped inflatable bladder (not shown, see e.g., bladder 316 of FIG. 3A) with open main line ends and a closed branch end collapsed inside corresponding main line ends and a branch end of the fitting 204, which is also collapsed while the fitting 204 is being placed within the underground pipeline 206. A first main line end of the bladder is secured to a first end coupling, which may serve as a tow bar to connect the in-place repair device 286 to robot 234. A second main line end of the bladder is secured to a second end coupling, which may serve to connect the bladder to a pressurized heating gas input line 226 and a pressure-relieving output line 228. The in-place repair device 286 utilize the fitting 204 to effect an in-place repair of the damaged tee junction 202 within the pipeline 206.

A first set of steps prepares the in-place repair device 286 for use inside the underground pipeline 206. The bladder is placed inside the fitting 204 and into corresponding main line ends and a branch end of the fitting 204. The fitting 204 is heated above a plastic deformation temperature threshold that renders the fitting 204 readily pliable. The heating operation 910 may be performed by point application of steam or other heated fluid, immersion in heated water or other heated fluid, or other mechanisms of applying heat to the fitting 204.

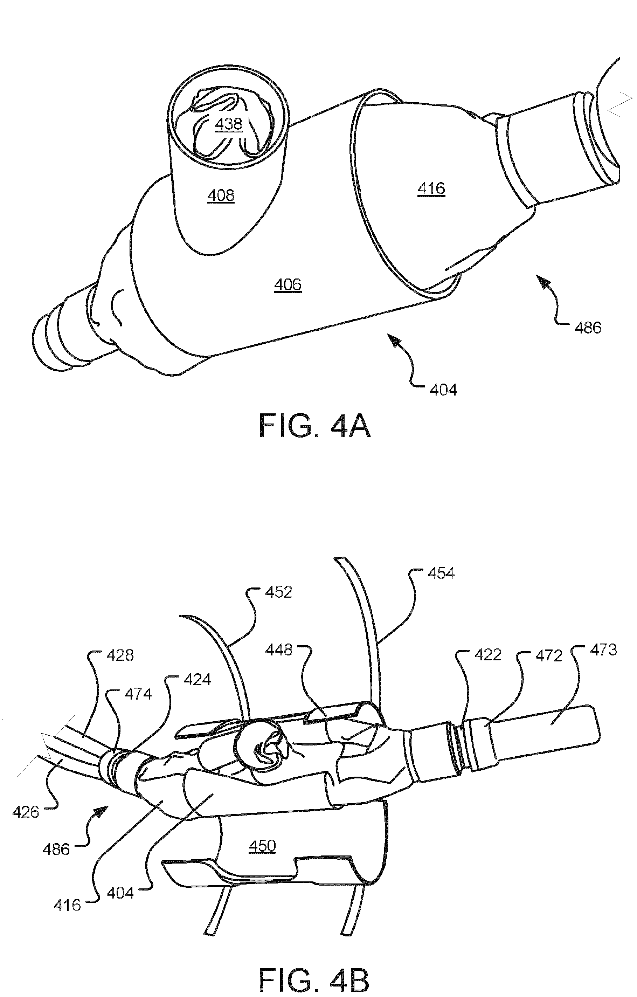

While the fitting 204 is hot and readily pliable, the heated fitting 204 is compressed over the bladder within a compression shell (not shown, see e.g., compression shell parts 448, 450 of FIG. 4B). The compression shell is used to apply uniform pressure over an exterior of the fitting 204 so that it is compressed sufficiently all around to readily pass within an interior circumference of the pipeline 206. The fitting 204 remains within the compression shell until it sufficiently cools to hold its compressed shape and then the compressed fitting 204 and bladder inside are removed from the compression shell.

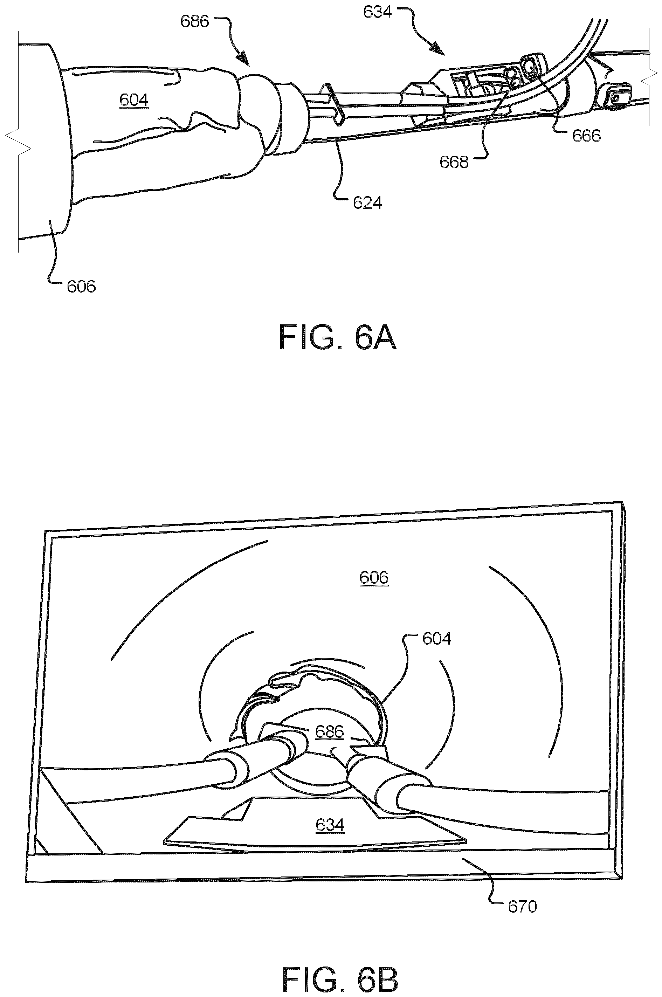

The robot 234 is connected to the first end coupling of the in-place repair device 286. The robot 234 includes a video camera (not shown, see e.g., video camera 668 of FIG. 6A) aimed at the in-place repair device 286 and is remotely connected to a monitor 270 that permits an operator 288 to remotely monitor the position of the in-place repair device 286 within the underground pipeline 206 with reference to the damaged tee junction 202. The robot 234 is further controlled by a controller 290 that permits the operator 288 to move the robot 234 linearly within the underground pipeline 206, as illustrated by arrow 292. The controller 290 further permits the operator 288 to rotate the robot 234 within the underground pipeline 206, as illustrated by arrow 294. This linear movement and rotation of the robot 234 and corresponding connected in-place repair device 286 within the underground pipeline 206, informed by feedback provided by the video feed to the monitor 270, allows the operator 288 to accurately place the fitting 204 within the underground pipeline 206 where it may be used to repair the damaged tee junction 202. The monitor 270 and controller 290 are connected to the robot 234 via wired and/or wireless connections, though a wireless connection is depicted in FIG. 2 and illustrated as lightning 299.

The heating gas input line 226 is connected to the second end coupling of the in-place repair device 286. A pressure-relieving output line 228 is also connected to the second end coupling. Other combinations of connections of the robot 234 and the lines 226, 228 to the first and second end couplings of the in-place repair device 286 are contemplated herein. This may vary based on whether the robot 234 is to push or pull the in-place repair device 286 into place within the underground pipeline 206 and which (or both) of the manhole chambers 282, 284 is accessed to supply the heated gas source and vent the pressure relief. Following the foregoing steps, the in-place repair device 286, fitting 204 thereon, and robot 234 are ready for placement within the pipeline 206 for performing the damaged pipe junction repair.

The compressed fitting 204 and the tee bladder therein is placed within the pipeline 206 starting at one of the manhole chambers 282, 284. The compressed fitting 204 and the tee bladder is then run linearly within the underground pipeline 206 to a position adjacent the damaged tee junction using the robot 234 to push or pull the in-place repair device 286. The robot 234 further rotates the compressed fitting 204 and bladder therein to align the branch end 207 of the fitting 204 to a branch end 208 of the damaged tee junction 202.

Pressurized heating gas 297 (e.g., steam from a boiler) is pumped into the line 226, as illustrated by arrow 293. In the case of steam from the boiler, temperature and pressure gauges are used to keep the steam input to the in-place repair device 286 at approximately 300 to 400 degrees Fahrenheit. A valve set (e.g., valve 296) controls a rate of steam input to the in-place repair device 286 and a rate of steam output from the in-place repair device 286 via lines 226, 228 respectively.

Application of the pressurized heating gas 297 to the in-place repair device 286 accomplishes three goals, all of which occur substantially simultaneously, or at least overlapping in occurrence. The pressurized heating gas 297 inflates the bladder, re-heats the fitting 204 above the plastic deformation temperature threshold, and expands the fitting 204 using outward pressure applied by the inflating bladder. This pushes the collapsed fitting 204 outward, expanding the fitting 204 into corresponding main line ends and a branch end of the damaged tee junction 202. To maintain a supply of heating gas 297 to the bladder and a desired pressure within the bladder, the pressure-relieving output line 228 permits the heating gas 297 to also exit the bladder via the pressure-relieving output line 228 at a desired rate, as illustrated by arrow 295. The pressure-relieving output line 228 may include an orifice or adjustable valve 296 to achieve and maintain the desired pressure within the bladder.

At the conclusion of the foregoing steps, the fitting 204 is molded to interior circumferential surfaces of the damaged tee junction 202, thus completing the in-place repair. The fitting 204 main line ends and branch end 207 correspond to the main line ends and the branch end 208 of the damaged tee junction 202. The fitting 204 underlaps and seals against the damaged tee junction 202.

To remove the in-place repair device 286 from the underground pipeline 206 following a successful repair (or an unsuccessful repair that must be repeated), the pressurized heating gas 297 is disconnected from the heating gas input line 226, thereby allowing the bladder to be deflated by venting the pressure pressurized heating gas to either or both of the lines 226, 228. The robot 234 is used to retract the in-place repair device 286 from the pipeline 206. The robot 234 and the in-place repair device 286 can then be re-used to attempt the repair again (in the case of an unsuccessful repair) or perform an entirely new repair on the underground pipeline 206 or another pipeline.

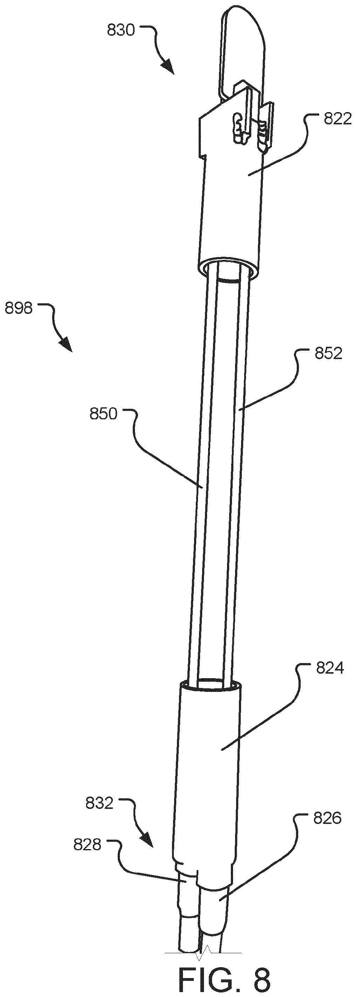

FIG. 3A illustrates an example in-place repair device 386 according to the presently disclosed technology. The in-place repair device 386 includes a tee-shaped inflatable bladder 316 supported by an internal frame (not shown, see e.g., frame 898 of FIG. 8) that establishes two ends of the repair device 386 and a distance therebetween. The bladder 316 has open main line ends 330, 332 and a closed branch end 338 and is selectively expandable in diameter. The bladder 316 is described herein as being of an expandable construction. This generally means a material selection that is resiliently deflectable and fluid impervious (e.g., rubber (natural or synthetic), silicone, nitrile, vinyl, and neoprene) under expected load conditions and perhaps includes fiber reinforcement (e.g., embedded textile or a textile exterior layer) for additional strength and/or abrasion protection. The open main line ends 330, 332 of the bladder 316 are each secured to end couplings 322, 324, respectively. In some cases, compression sleeves 340, 342 are used to provide a fluid-tight seal between the open main line ends 330, 332 of the bladder 316 and the end couplings 322, 324.

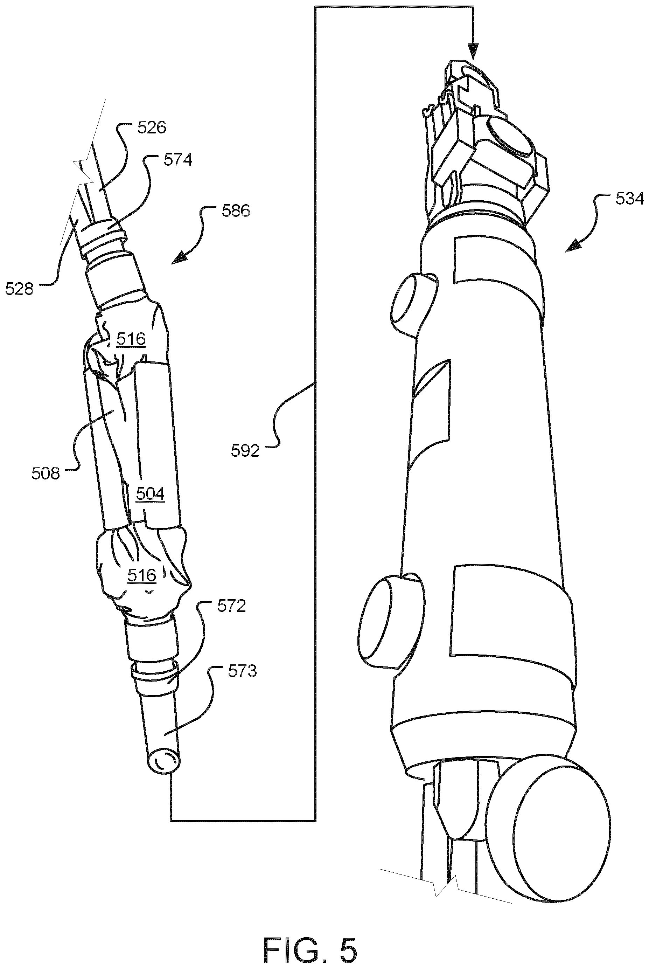

A first end fitting 372 is connected to (e.g., screwed onto) the first end coupling 322 and serves to cap a first end of the repair device 386. The first end fitting 372 may also serve as a hitch for the repair device 386 by way of a tow bar (not shown, see e.g., tow bar 473 of FIG. 4B). The tow bar allows the repair device 386 to be attached to a robot (not shown, see e.g., robot 534 of FIG. 5) that provides the controlled motive force, as well as visibility into a pipeline and on a PVC repair tee fitting (not shown, see e.g., PVC repair tee fitting 304 of FIG. 3B) for accurate placement within a damaged tee junction (also not shown, see e.g., damaged tee junction 202 of FIG. 2).

A second end fitting 374 is connected to (e.g., screwed onto) the second end coupling 324 and serves to cap a second end of the repair device 386. The second end fitting 374 may also serve as a heating gas input into the repair device 386 and/or pressure-relieving output from the repair device 386. To that end, the second end fitting 374 may be equipped with a pair of air fittings (not shown, see e.g., air fittings / lines 426, 428 of FIG. 4B). The air fittings are used to selectively deflate the bladder 316 to permit a moldable PVC repair tee fitting (not shown, see e.g., moldable junction fitting 304) to be loosely fit thereon and to permit the repair device 386 and moldable junction fitting to easily slide within the pipeline. As such, in the deflated position, the repair device 386 and moldable junction fitting compressed thereon is significantly smaller than an internal diameter of the pipeline.

The air fittings are also used to selectively inflate the bladder 316 to increase its external diameter from its deflated diameter once the repair device 386 and moldable junction fitting are in place within the damaged tee junction. Inflation of the bladder 316 applies outward pressure on the moldable junction fitting within the main of the pipeline to mold the moldable junction fitting to an interior of the main line and branch(es) of the damaged tee junction. Thus, inflated diameter of the in line and branch(es) of the bladder 316 are matched to that of the damaged tee junction. As such, when inflated, the bladder 316 is capable of matching the internal diameter of the main line and branch(es) of the pipeline and applying outward pressure at those diameters.

In some implementations, one of the end fitting 372, 374 may attached to a rolling trolley (not shown) that allows the repair device 386 to more easily slide within the pipeline and be more easily controlled using motive force to a damaged tee junction. The rolling trolley may be equipped with pivoting casters that allow the repair device 386 to easily slide within the pipeline, even as the repair device 386 is rotated. The rolling trolley may be clamped, bolted, or otherwise attached to one of the end fitting 372, 374. In further implementations, the various functionalities of the end fitting 372, 374 described herein may be swapped to the other of the end fitting 372, 374 as defined by a specific implementation of the presently disclosed technology.

FIG. 3B illustrates an example PVC repair tee fitting 304 that corresponds to the in-place repair device 386 of FIG. 3A. Similar to the damaged tee junction 102 of FIG. 1A, the repair tee fitting 304 may be in the form of a variety of tee fittings, such an angled tee fitting (as shown) or a 90-degree tee fitting. A main 306 of the repair tee fitting 304 may be larger than a branch 308 of the repair tee fitting 304 (as illustrated), the branch 308 may be larger than the main 306, or the main 306 and the branch 308 may be of the same size. The repair tee fitting 304 may also have varied overall sizes (e.g., 2" to 20" in diameter). In the depicted example, the main 306 is 8" diameter pipe with a 4" diameter branch 308 extending outward from the main 306 at a 45-degree angle. Other pipe dimensions and orientations are contemplated herein. The repair tee fitting 304 is of a material construction (e.g., PVC) that is generally rigid within expected normal operating temperatures (e.g., below a plastic deformation temperature threshold, such as 200-degrees Fahrenheit) and pliable (or moldable) above normal operating temperatures (e.g., above a plastic deformation temperature threshold, such as 200-degrees Fahrenheit).

The repair tee fitting 304 further includes sealing gaskets 356, 358, 360 encircling each end of the main 306 and the end of the branch 308 of the repair tee fitting 304. The sealing gaskets 356, 358, 360 aid sealing the repair tee fitting 304 to interior circumferential surfaces of the damaged tee junction (not shown, see e.g., damaged tee junction 102 of FIG. 1A) when installed. The sealing gaskets 356, 358, 360 may be of any pliable and fluid impervious material (e.g., rubber (natural or synthetic), silicone, nitrile, vinyl, and neoprene) that readily deforms when the repair tee fitting 304 is installed. In some implementations, the sealing gaskets 356, 358, 360 are impregnated with an epoxy, resin, glue, or other type of additional sealant prior to installation within the damaged tee junction to further aid in establishing an effective seal between the repair tee fitting 304 and the damaged tee junction.

The sealing gaskets 356, 358, 360 affix the repair tee fitting 304 to the damaged tee junction. To absorb epoxy, silicone, or other fluid or semi-fluid sealants, the sealing gaskets 356, 358, 360 may be made of sponge, felt or the like. Having the sealing gaskets 356, 358, 360 be absorbent allows easy transport and containment of the fluid or semi-fluid sealant that might otherwise be pushed away from the sealing gaskets 356, 358, 360 during installation of the repair tee fitting 304. The sealing gaskets 356, 358, 360 provide an additional barrier against leakage between the repair tee fitting 304 and the damaged tee junction. As can be appreciated by one skilled in the art, the damaged tee junction may have imperfections which would prevent the repair tee fitting 304 alone from effectively sealing against the damaged tee junction, but the sealing gaskets 356, 358, 360 conform to any imperfections to provide a better seal. The sealing gaskets 356, 358, 360 are able to compress to about one-third or less of their original thickness during installation of the repair tee fitting 304, for example. The sealing gaskets 356, 358, 360 may be of a sponge-like material of a thickness greater than 5 mm that may or may not be impregnated with the fluid or semi-fluid sealant. In other implementations, the sealing gaskets 356, 358, 360 can be anything at any location on the moldable junction fitting 304 that bonds the repair tee fitting 304 to the damaged tee junction and substantially prevents foreign matter, including water, from seeping into the pipeline from an exterior environment, or vice versa. In other implementations, the sealing gaskets 356, 358, 360 are omitted as the repair tee fitting 304 adequately form-fits and seals to the damaged tee junction without.

FIG. 4A illustrates an example in-place repair device 486 positioned within a PVC repair tee fitting 404 immediately prior to compression of the repair tee fitting 404 within a compression shell (not shown, see e.g., compression shell parts 448, 450 of FIG. 4B). The repair tee fitting 404 is fit to the repair device 486, particularly with a main 406 of the repair tee fitting 404 fit around bladder 416 with closed branch end 438 of the bladder 416 extending through a branch 408 of the repair tee fitting 404. This fitment may be manually manipulated to get the positioning of the repair tee fitting 404 with reference to the repair device 486 just right, as generally depicted in FIG. 4A.

The repair tee fitting 404 is then heated to in excess of a plastic deformation temperature threshold so that it becomes readily pliable immediately prior to compression of the repair tee fitting 404 within the compression shell. In some application, this involves covering the repair tee fitting 404 and applying heated steam thereto. The water content of the heated steam speeds transfer of thermal energy to the repair tee fitting 404, thereby making the process of rendering the repair tee fitting 404 readily pliable more efficient than application of dry heat. Before the repair tee fitting 404 sufficiently cools so that it again becomes substantially rigid, the repair tee fitting 404 and underlying repair device 486 is compressed within the compression shell.

FIG. 4B illustrates the PVC repair tee fitting 404 and in-place repair device 486 of FIG. 4A after being compressed within a compression shell (illustrated as compression shell parts 448, 450). After being heated above the plastic deformation temperature threshold, and between the states illustrated in FIGs. 4A and 4B, the repair tee fitting 404 and repair device 486 are manually deformed into a generally cylindrical shape using the compression shell parts 448, 450. Specifically, the compression shell parts 448, 450 are closed around the repair tee fitting 404 and repair device 486 and tightened using band clamps 452, 454. In some implementations, manual deformation is sufficient to collapse the repair tee fitting 404 onto the repair device 486 without use of the compression shell parts 448, 450 and/or the band clamps 452, 454. Other clamping solutions beyond manual deformation and use of the compression shell parts 448, 450 and the band clamps 452, 454 are contemplated herein. The compression shell (of two parts 448, 450 of FIG. 4B) is then opened, as illustrated in FIG. 4B and the repair tee fitting 404 and repair device 486 remain in the collapsed state as the temperature falls below the plastic deformation temperature threshold.

A first end fitting 472 is connected to (e.g., screwed onto) a first end coupling 422 and serves to cap a first end of the repair device 486. The first end fitting 472 may also serve as a hitch for the repair device 486 by way of a tow bar 473. The tow bar 473 allows the repair device 486 to be attached to a robot (not shown, see e.g., robot 534 of FIG. 5).

A second end fitting 474 is connected to (e.g., screwed onto) a second end coupling 424 and serves to cap a second end of the repair device 486. The second end fitting 474 may also serve as a heating gas input into the repair device 486 and/or pressure-relieving output from the repair device 486. To that end, the second end fitting 474 may be equipped with a pair of air fittings / lines 426, 428. The air fittings / lines 426, 428 are used to selectively deflate bladder 416 to permit the repair tee fitting 404 to be loosely fit thereon (as illustrated in FIG. 4A) and to permit the repair device 486 and repair tee fitting 404 to easily slide within the pipeline for accurate placement. As such, in the depicted deflated state, the repair device 486 and the repair tee fitting 404 compressed thereon is significantly smaller than an internal diameter of the pipeline.

FIG. 5 illustrates an example compressed PVC repair tee fitting 504 and in-place repair device 586 to be attached to a robot 534 prior to placement within a pipeline (not shown, see e.g., pipeline 606 of FIG. 6A). Once the moldable junction fitting 504 is sufficiently cooled to a temperature where it returns to a substantially rigid state (i.e., a temperature below the plastic deformation temperature threshold), the compression shell parts 448, 450 of FIG. 4B are removed. As the repair tee fitting 504 is now in a substantially rigid state, it remains in the collapsed around bladder 516 of the repair device 586, and with a branch (not shown) of the bladder 516 extending through a branch 508 of the repair tee fitting 504.

A trailing end of the repair device 586 includes an end fitting 574 with a pair of air fittings and associated pneumatic lines 526, 528 extending therefrom. One of the pneumatic lines 526, 528 is used to selectively apply pressurized heating gas (e.g., steam) to the repair device 586 to selectively inflate the bladder 516. The other of the pneumatic lines 526, 528 is used to vent the pressurized heating gas from the bladder 516 to maintain a desired pressure and temperature therein.

A leading end of the repair device 586 includes an end fitting 572 that is attached to a tow bar 573 that allows the repair device 486 to be attached to the robot 534, as illustrated by arrow 592. The robot 534 provides the controlled motive force to the repair device 586, as well as visibility into the pipeline and on the repair tee fitting 504 for accurate placement within a damaged tee junction (not shown, see e.g., damaged tee junction 102 of FIG. 1A).

FIG. 6A illustrates insertion of a leading end of an example compressed PVC repair tee fitting 604 and in-place repair device 686 into a pipeline 606 using a robot 634. In the depicted collapsed state, the repair device 686 and repair tee fitting 604 thereon are significantly smaller than an internal diameter of the pipeline 606. This allows the repair device 686 and repair tee fitting 604 thereon to be driven into the pipeline 606 using motive force provided by the attached robot 634. The robot 634 is attached to a leading end of the repair device 686 via a tow bar (not shown, see e.g., tow bar 573 of FIG. 5) or an attachment bracket 624.

The robot 634 is remotely computer controlled by an operator (not shown, see e.g., operator 288 of FIG. 2) to drive the repair device 686 in forward and reverse directions and rotationally within the pipeline 606. Further, the robot 634 is equipped with lights (e.g., light 666) and a video camera 668 that aids the operator in accurately positioning the repair tee fitting 604 within the pipeline 606, particularly at a damaged tee junction (not shown, see e.g., damaged tee junction 102 of FIG. 1A).

FIG. 6B is a rear-facing view of the compressed PVC repair tee fitting 604 and in-place repair device 686 of FIG. 6A as viewed from the robot 634 and remotely displayed on a monitor 670. The rear-facing view is depicted on the monitor 670 for the operator's use in driving the robot 634 within the pipeline 606 and accurately placing the moldable junction fitting 604 at the damaged tee junction. The rear-facing view is as recorded by the video camera 668 mounted on the robot 634 and pointed toward the repair device 686.

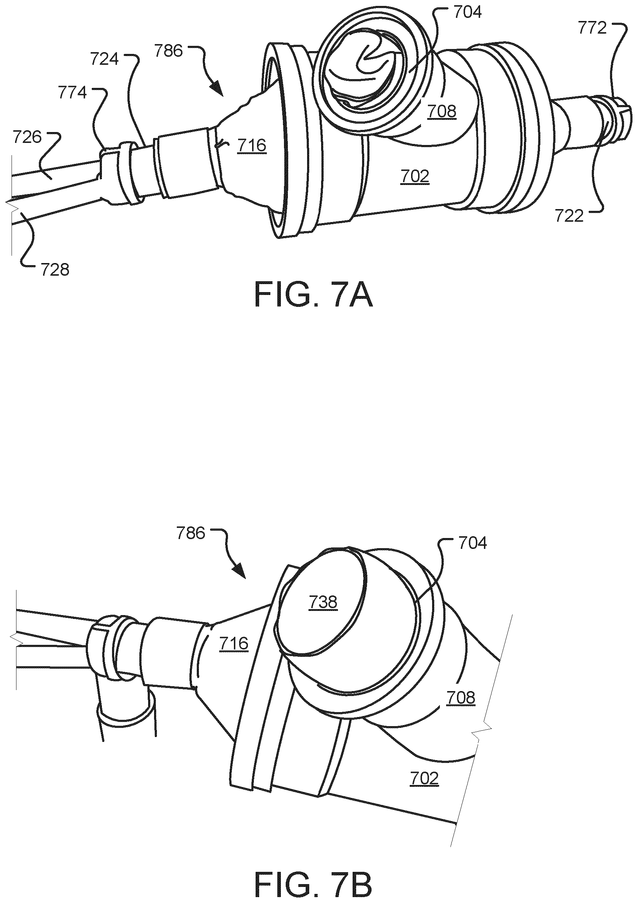

FIG. 7A is an exterior view of a damaged tee junction 702 with an example PVC repair tee fitting 704 and in-place repair device 786 partially inflated and in-place therein. The damaged tee junction 702 is illustrated in FIGs. 7A&7B as a PVC fitting to illustrate placement of the repair tee fitting 704 and in-place repair device 786. In practice, the damaged tee junction 702 could merely be a section of main pipe with a branch pipe extending away from the main pipe. As such, truncated branch 708 shows the repair tee fitting 704 partially extending therefrom, though in practice, the entire repair tee fitting 704 would be form fit within the damaged tee junction 702 and not visible.

Once the repair device 786 with repair tee fitting 704 thereon is accurately placed at the damaged tee junction 702 using the robot (not shown, see e.g., robot 634 of FIGs. 6A&B), the repair tee fitting 704 is heated to a temperature above the plastic deformation temperature threshold so that it again becomes readily pliable. Heating the repair tee fitting 704 is achieved by inflating bladder 716 using pressurized heating gas (e.g., steam) input into the tee bladder 716 via end coupling 724. When using steam as the pressurized heating gas, the water content of the heated steam speeds transfer of thermal energy to the repair tee fitting 704, thereby making the process of rendering the repair tee fitting 704 readily pliable more efficient than application of dry heat.

A first end fitting 774 is connected to (e.g., screwed onto) the end coupling 724 and includes a pair of air fittings and associated pneumatic lines 726, 728 extending therefrom. One of the pneumatic lines 726, 728 is used to selectively apply the pressurized heating gas to the repair device 786 to selectively inflate the bladder 716. The other of the pneumatic lines 726, 728 is used to vent the pressurized heating gas from the bladder 716 to maintain a desired pressure and temperature therein. A second end fitting 772 is connected to (e.g., screwed onto) a first end coupling 722 and serves to cap a second end of the repair device 786 so that the bladder 716 is inflatable.

The pressurized heating gas is pumped into and out of the bladder 716, thereby heating the repair tee fitting 704 within the surrounding pipeline so that it is readily pliable within the pipeline. The bladder 716 is illustrated in FIG. 7A as only partially inflated with the pressurized heating gas to allow the repair device 786 to be adjusted within the pipeline using the robot as the repair tee fitting 704 is placed. This process may be iterative in that the bladder 716 may be inflated and deflated repeatedly, while the robot adjusts the orientation of the repair tee fitting 704 within the damaged tee junction 702 to achieve an accurate placement and fit.

FIG. 7B illustrates the in-place repair device 786 of FIG. 7A fully inflated, thereby molding exterior surfaces of the repair tee fitting 704 to interior surfaces of the damaged tee junction 702. The repair device 786 is considered properly in place within the pipeline when it is aligned longitudinally with the damaged tee junction 702, and rotated such that the closed branch end 738 of bladder 716 is aligned with branch 708 of the damaged tee junction 702, and the closed branch end 738 with associated branch of the repair tee fitting 704 extends into the branch 708 of the damaged tee junction 702.

While keeping the repair tee fitting 704 hot enough to be readily pliable using the supplied pressurized heating gas, the bladder 716 is inflated to increase its external diameter from its deflated diameter. Inflation of the bladder 716 applies outward pressure on the repair tee fitting 704 within the damaged tee junction 702 to mold and form-fit the repair tee fitting 704 to an interior of the damaged tee junction 702 (see e.g., seam 112 of FIG. 1B).

Inflation and deflation of the bladder 716 may be repeated to work the repair tee fitting 704 into position within damaged tee junction 702. In the fully inflated position, the bladder 716 presses the repair tee fitting 704 outward to match the internal diameter of the damaged tee junction 702 and applying outward pressure on its interior surfaces. Once the repair tee fitting 704 is accurately form-fit to the interior of the damaged tee junction 702, the bladder 716 remains inflated, but the pressurized heating gas vent is closed until the repair tee fitting 704 cools sufficiently to again become substantially rigid. In some implementations, this may include pumping ambient or cool air in place of the pressurized heating gas into the bladder 716 to accelerate cooling of the repair tee fitting 704.

The repair device 786 can then be withdrawn from the pipeline, leaving the repair tee fitting 704 in place thereby repairing the damaged tee junction 702 without external access to the damaged tee junction 702. The repair tee fitting 704 is sealed to the damaged tee junction 702 by virtue of the foregoing form-fitting process. This seal is in some implementations supplemented by one or more sealing gaskets (not shown, see e.g., sealing gaskets 356, 358, 360 of FIG. 3B).

The following is a summary method of using the aforementioned repair tee fitting 704 to repair the damaged tee junction 702. The first step requires identifying the damaged tee junction 702. Identification may be done visually by an operator of a robot (e.g., robot 534 of FIG. 5) remotely operated using a video camera or other sensing device. Once the damaged tee junction 702 is identified, the repair tee fitting 704 may be fit to the repair device 786. This is done by heating the repair tee fitting 704 sufficiently for it to become substantially pliable, fitting the repair tee fitting 704 to the repair device 786, compressing the repair tee fitting 704 and the repair device 786 together (e.g., via a compression shell), cooling the repair tee fitting 704 sufficiently for it to become substantially rigid, and then removing the repair tee fitting 704 and the repair device 786 from the compression shell.

The repair tee fitting 704 and the repair device 786 are then attached to the robot. Compressed air lines controlling inflation of the bladder 716 are connected to the repair device 786. The robot is remotely operated to position the repair tee fitting 704 and the repair device 786 within the pipeline and align the repair tee fitting 704 with the damaged tee junction 702.

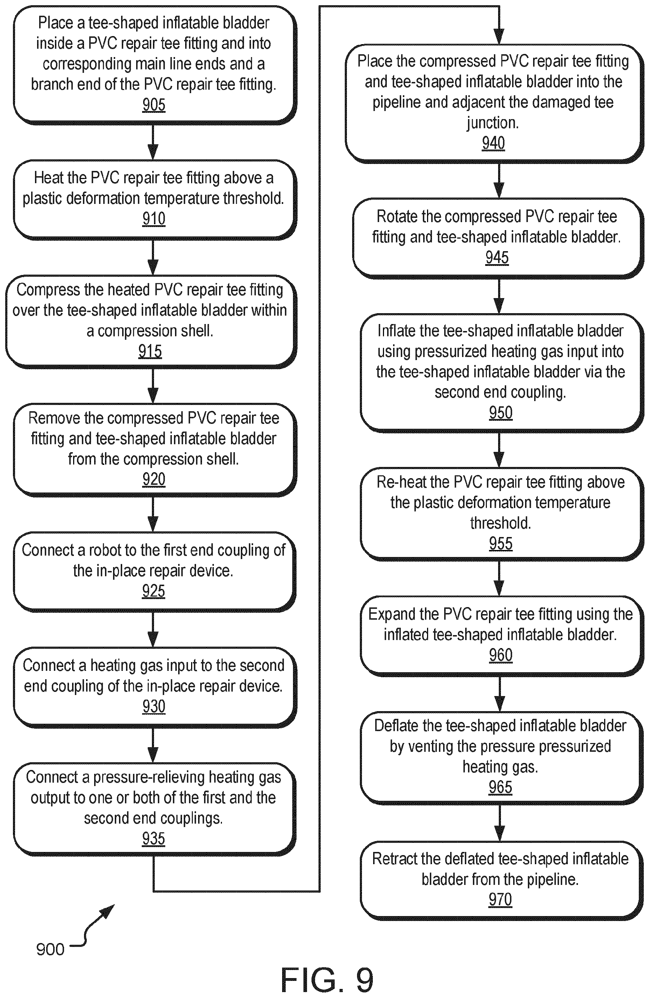

Steam or other pressurized heating gas is pumped to the repair device 786 to heat the repair tee fitting 704 to a point where it is again substantially pliable and inflate the bladder 716 to form-fit the repair tee fitting 704 to interior surfaces of the damaged tee junction 702. The repair tee fitting 704 is held in place within the damaged tee junction 702 by the inflated bladder 716 until the repair tee fitting 704 cools to a point where is it again substantially rigid. Once the repair tee fitting 704 is again substantially rigid, the repair device 786 may be withdrawn from the pipeline leaving the repair tee fitting 704 in place, thereby repairing the damaged tee junction 702 without external access to the damaged tee junction 702. A further detailed set of operations is set forth in FIG. 9, discussed below.

FIG. 8 illustrates an example frame 898 for an in-place repair device (not shown, see e.g., in-place repair device 386 of FIG. 3A) that establishes two ends 830, 832 of the repair device and a distance therebetween. The repair device includes a tee-shaped inflatable bladder (not shown, see e.g., tee-shaped inflatable bladder 316 of FIG. 3A) supported by the frame 898 that is internal to the bladder and establishes the two ends 830, 832 of the repair device and a distance (e.g., 2-3 feet) therebetween.

Support rods 850, 852 connect end couplings 822, 824 serve as mating surfaces for ends of the inflatable bladder that is compression fit to the end couplings 822, 824 with compression sleeves (not shown, see e.g., compression sleeves 340, 342 of FIG. 3A). This seals open main line ends of the inflatable bladder to the frame 898. The branch end of the inflatable bladder is also closed, thereby yielding an inflatable bladder only fluidly open to a pair of air fittings 826, 828 at end coupling 824.

The end coupling 824 caps the end 832 of the repair device and serves as a heating gas input into the repair device and/or pressure-relieving output from the repair device via the air fittings 826, 828. The air fittings 826, 828 are used to selectively inflate and deflate the bladder. The end coupling 822 caps the end 830 of the repair device and serve as a hitch that allows the repair device to be attached to a robot (not shown, see e.g., robot 534 of FIG. 5).

FIG. 9 illustrates example operations 900 for repairing a damaged tee junction in place within a pipeline. The operations 900 utilize the PVC repair tee fittings and in-place repair devices described herein to effect in-place repairs of damaged tee junction within a pipeline. An in-place repair device may include a tee-shaped inflatable bladder with open main line ends and a closed branch end. A first open main line end is secured to a first end coupling, and a second open main line end is secured to second end coupling of the in-place repair device.

A placing operation 905 places the tee-shaped inflatable bladder inside a PVC repair tee fitting and into corresponding main line ends and a branch end of the PVC repair tee fitting. The tee-shaped inflatable bladder is readily flexible while deflated, so the placing operation 905 may be readily performed manually. A heating operation 910 heats the PVC repair tee fitting above a plastic deformation temperature threshold. The heating operation 910 may be performed by point application of steam or other heated fluid, immersion in heated water or other heated fluid, or other mechanisms of applying heat to the PVC repair tee fitting. The heating operation 910 renders the PVC repair tee fitting readily pliable.

While the PVC repair tee fitting is hot and readily pliable, a compressing operation 915 compresses the heated PVC repair tee fitting over the tee-shaped inflatable bladder within a compression shell. The compression shell is used to apply uniform pressure over an exterior of the PVC repair tee fitting so that it is compressed sufficiently all around to readily pass within an interior circumference of the main line of the pipeline to be repaired. The PVC repair tee fitting remains within the compression shell until it sufficiently cools to hold its compressed shape. A removing operation 920 removes the compressed PVC repair tee fitting and tee-shaped inflatable bladder from the compression shell.

A first connecting operation 925 connects a robot to the first end coupling of the in-place repair device. A second connecting operation 930 connects a heating gas input to the second end coupling of the in-place repair device. A third connecting operation 935 connects a pressure-relieving heating gas output to one or both of the first and the second end couplings. Following the connecting operation 925, 930, 935, the PVC repair tee fitting and in-place repair device is ready for placement within the pipeline for performing a damaged pipe junction repair.

A placing operation 940 places the compressed PVC repair tee fitting and tee-shaped inflatable bladder into the pipeline and adjacent the damaged tee junction. A rotating operation 945 rotates the compressed PVC repair tee fitting and tee-shaped inflatable bladder to align the branch end of the PVC repair tee fitting to a branch end of the damaged tee junction. In implementations that utilize a robot, extending the compressed PVC repair tee fitting and tee-shaped inflatable bladder into the pipeline and rotate the compressed PVC repair tee fitting and tee-shaped inflatable bladder is performed by the robot pulling, pushing, and/or rotating the compressed PVC repair tee fitting and tee-shaped inflatable bladder. In other implementations, the placing operation 940 and rotating operation 945 may be performed using other mechanisms.

An inflating operation 950 inflates the tee-shaped inflatable bladder using pressurized heating gas input into the tee-shaped inflatable bladder via the second end coupling. A re-heating operation 955 re-heats the PVC repair tee fitting above the plastic deformation temperature threshold. An expanding operation 960 expands the PVC repair tee fitting using the inflated tee-shaped inflatable bladder within the damaged PVC tee fitting and into corresponding main line ends and a branch end of the damaged PVC tee fitting. The re-heating and expanding operations 955, 960 are performed using the inflating operation 950 as the pressurized heating gas (e.g., steam) is hot and thereby heats the PVC repair tee fitting and applied under pressure, thereby inflating the bladder. As a result, the inflating, re-heating, and expanding operations 950, 955, 960 are performed substantially simultaneously. At the conclusion of the inflating, re-heating, and expanding operations 950, 955, 960, the PVC repair tee fitting molded to interior circumferential surfaces of the damaged tee junction.

A deflating operation 965 deflates the tee-shaped inflatable bladder by venting the pressure pressurized heating gas. A retracting operation 970 retracts the deflated tee-shaped inflatable bladder from the pipeline. The expanded PVC repair tee fitting remains in place within the damaged PVC tee fitting. The PVC repair tee fitting main line ends and branch end corresponding to the main line ends and the branch end of the damaged tee junction. The PVC repair tee fitting underlaps and seals against the damaged tee junction.

Logical operations making up implementations of the invention described herein may be referred to variously as operations, method steps, objects, or modules. Furthermore, it should be understood that logical operations may be performed in any order, adding or omitting operations as desired, regardless of whether operation are labeled or identified as optional, unless explicitly claimed otherwise or a specific order is inherently necessitated by the claim language. A number of implementations of the described technology have been described. Nevertheless, it will be understood that various modifications can be made without departing from the spirit and scope of the recited claims.

It is thus one object of the presently disclosed technology to provide an apparatus and method for sealing a damaged tee junction, in particular between a lateral service line and a main pipeline from the inside-out, i.e., using trenchless technology. Thus, in one aspect of the presently disclosed technology a PVC repair tee fitting (alternatively, a moldable junction fitting) is provided which may be positioned and installed with a robot within a main pipeline. The presently disclosed technology may be comprised of a polyvinyl chloride (PVC) material, or the like, and have a shape and size to fit the internal surfaces of the main pipeline and an extending branch (or stem) that penetrates into the lateral service line.

In another aspect of the presently disclosed technology, the moldable junction fitting contains an interconnection substrate such as felt, sponge or another similar material to provide a resilient, compressible material suitable for sealing the damaged tee junction. The interconnection substrate may be impregnated with a bonding agent such as a water activated epoxy or grout that sealingly interconnects the moldable junction fitting to the main pipeline and lateral service line. An adhesive, glue, or other type of material may be applied to the interconnector substrate just prior to installation. An annular gasket may also be positioned around the stem portion to promote sealing engagement between the stem and the internal surface of the lateral service line. The seal provided by the moldable junction fitting effectively eliminates most water intrusion or the influx of plant roots and other matter at the junction point which can seriously damage or obstruct the main pipeline.

It is yet another object of the presently disclosed technology to provide a remotely controlled robot capable of applying the moldable junction fitting to the damaged tee junction between the main pipeline and lateral service line from within the main pipeline. The robot is attached to a repair device (alternatively, a pneumatic junction tool) as is used to direct the repair device and align the moldable junction fitting. Thus, in yet another aspect of the presently disclosed technology, the robot is a substantially elongated robot capable of traveling within a main sewer or other transmission line. The elongated robot is generally positioned by a remotely controlled assembly with an optical camera mechanism which properly allows an operator to accurately identify the damaged tee junction and align the moldable junction fitting with an aged or damaged pipe junction.

It is yet another object of the presently disclosed technology to provide a moldable junction fitting that is substantially pliable when heated, but substantially rigid patch at under expected service conditions, which does not require lengthy curing to install the moldable junction fitting at the damaged tee junction between the lateral service line and the main pipeline. Thus, the possibility of error is reduced since the moldable junction fitting is preformed and as such is not susceptible to failure as a result of non-controllable environmental factors such as debris in the pipeline, cold temperatures, etc. once properly placed. Furthermore, placing the moldable junction fitting does not require an entire service line to be lined, but only the damaged tee junction. Thus, significant time and expense can be saved while achieving a greater degree of reliability.

While various implementations of the present invention have been described in detail, it is apparent that modifications and adaptations of those implementations will occur to those skilled in the art. However, it is to be expressly understood that such modifications and adaptations are within the spirit and scope of the present invention.

## Claims

1. An in-place PVC tee fitting repair device comprising:
a tee-shaped inflatable bladder with open main line ends and a closed branch end, wherein a first open main line end is secured to a first end coupling and a second open main line end is secured to second end coupling;
a first end fitting connected to the first end coupling, the first end fitting serving as a hitch for the repair device; and
a second end fitting fluidly connected to the second end coupling, the second end fitting including a heating gas input.

2. The repair device of claim 1, further comprising:
a frame to establish two ends of the repair device and a distance therebetween.

3. The repair device of claim 1, wherein one or both of the first and the second end fittings includes a pressure-relieving output.

4. The repair device of claim 1, further comprising:
first and a second compression sleeves, wherein the first open main line end is secured to the first end coupling using the first compression sleeve and the second open main line end is secured to the second end coupling using the second compression sleeve.

5. The repair device of claim 1, wherein the tee-shaped inflatable bladder is or a resiliently flexible and fluid impervious material.

6. The repair device of claim 1, wherein the tee-shaped inflatable bladder including a textile exterior layer and rubber interior layer.

7. A method of repairing a damaged tee junction within a pipeline comprising:
placing a tee-shaped inflatable bladder with open main line ends and a closed branch end inside a PVC repair tee fitting and into corresponding main line ends and a branch end of the PVC repair tee fitting, wherein a first open main line end of the tee-shaped inflatable bladder is secured to a first end coupling and a second open main line end of the tee-shaped inflatable bladder is secured to second end coupling;
heating the PVC repair tee fitting above a plastic deformation temperature threshold;
compressing the heated PVC repair tee fitting over the tee-shaped inflatable bladder within a compression shell;
removing the compressed PVC repair tee fitting and tee-shaped inflatable bladder from the compression shell;
connecting a heating gas input to the second end coupling;
placing the compressed PVC repair tee fitting and tee-shaped inflatable bladder into the pipeline and adjacent the damaged tee junction;
rotating the compressed PVC repair tee fitting and tee-shaped inflatable bladder to align the branch end of the PVC repair tee fitting to a branch end of the damaged tee junction;
inflating the tee-shaped inflatable bladder using pressurized heating gas input into the tee-shaped inflatable bladder via the second end coupling;
re-heating the PVC repair tee fitting above the plastic deformation temperature threshold; and
expanding the PVC repair tee fitting using the inflated tee-shaped inflatable bladder within the damaged PVC tee fitting and into corresponding main line ends and a branch end of the damaged PVC tee fitting.

8. The method of claim 7, further comprising:
deflating the tee-shaped inflatable bladder; and
retracting the deflated tee-shaped inflatable bladder from the pipeline, with the expanded PVC repair tee fitting remaining in place within the damaged PVC tee fitting.

9. The method of claim 7, further comprising:
connecting a pressure-relieving heating gas output to one or both of the first and the second end couplings.

10. The method of claim 7, further comprising:
connecting a robot to the first end coupling, wherein extending the compressed PVC repair tee fitting and tee-shaped inflatable bladder into the pipeline and adjacent the damaged PVC tee fitting is performed by the robot pulling or pushing the compressed PVC repair tee fitting and tee-shaped inflatable bladder into position.

11. The method of claim 10, wherein rotating the compressed PVC repair tee fitting and tee-shaped inflatable bladder to align the branch end of the PVC repair tee fitting to the branch end of the damaged PVC tee fitting is further performed by the robot rotating within the pipeline.

12. The method of claim 10, wherein the robot is connected to the first end coupling via a first end fitting connected to the first end coupling, the first end fitting serving as a hitch for the tee-shaped inflatable bladder.

13. The method of claim 7, wherein the heating gas input is connected to the second end coupling via a second end fitting fluidly connected to the second end coupling.

14. The method of claim 7, wherein the heating gas is steam.

15. The method of claim 7, wherein the re-heating and expanding operations are performed using the inflating operation.

16. The method of claim 7, wherein the inflating, re-heating, and expanding operations are performed substantially simultaneously.

17. A repaired tee fitting within a pipeline comprising:
a damaged tee junction including main line ends and a branch end in place within the pipeline; and
a PVC repair tee fitting applied to the damaged tee junction from within the pipeline, the PVC repair tee fitting molded to interior circumferential surfaces of the damaged tee junction, the PVC repair tee fitting including main line ends and a branch end corresponding to the main line ends and the branch end of the damaged tee junction, the PVC repair tee fitting underlapping and sealing against the damaged tee junction.

18. The repaired tee fitting within a pipeline of claim 17, wherein the damaged tee junction is a damaged junction between a main line and a service lateral for a sewer pipeline.

19. The repaired tee fitting of claim 17, wherein the damaged tee junction is of PVC, clay, iron, or alloy construction.

20. The repaired tee fitting of claim 17, wherein the repaired tee fitting includes sealing gaskets placed circumferentially around an exterior of each of the main line ends and the branch end of the PVC repair tee fitting, the sealing gaskets compressed between the PVC repair tee fitting and the damaged tee junction.
